# EUROPEAN PATENT APPLICATION

(11) **EP 4 815 257 A1**
(43) Date of publication of application: **30.09.2026**
(21) Application number: 26165647.4
(22) Date of filing: 18.03.2026
(51) Int. Cl.: H02J 50/12, B60L 53/124, H02J 50/60

(54) **OBJECT DETECTION IN WIRELESS CHARGING**

(30) Priority: 28.03.2025 US 202563779988 P
(71) Applicant: Tesla, Inc., Austin, TX 78725 (US)
(72) Inventor: O'MEARA, Suzanne, Austin, TX, 78725 (US)
(74) Representative: Liesegang, Eva

(57) **Abstract**

The present disclosure relates to methods and systems that can reliably detect foreign objects on a wireless charging pad under varying temperatures. In some examples, an object detector can utilize a set of inductive coils included in resonant tanks, and excite the resonant tanks using signals in a range of frequencies including or near a nominal resonant frequency of the resonant tanks. The object detector can detect a metal object based on resistance of a coil increasing and inductance of the coil decreasing. By analyzing the shifts and/or distributions in resonant frequencies and output magnitudes (e.g., output voltage peaks), the object detector can distinguish between changes of frequencies and magnitudes caused by temperature and those caused by foreign objects to accurately detect the foreign objects.

## Description

### TECHNICAL FIELD

The present disclosure relates to wireless charging technologies. More particularly, embodiments of the present disclosure relate to detecting objects on wireless charging devices under varying temperatures.

### BACKGROUND

Wireless charging devices are used to wirelessly charge a vehicle, such as an electric vehicle with a battery pack. A wireless charging device may cause power received from an external source, such as the grid, solar cell, and so on, to be wirelessly transmitted (e.g., via induction) to the electric vehicle. The wireless charging device may be positioned under the electric vehicle to charge the electric vehicle. The energy is transmitted wirelessly through the air in the form of a magnetic field. To ensure safety in wireless charging, it is desirable to detect object(s) on or near a surface of a wireless charging device (e.g., a wireless charging pad).

### SUMMARY OF CERTAIN INVENTIVE ASPECTS

The systems, methods and devices of this disclosure each have several innovative embodiments, no single one of which is solely responsible for all the desirable attributes disclosed herein. Details of one or more implementations of the subject matter described in this specification are set forth in the accompanying drawings and the description below.

In some aspects, the techniques described herein relate to a wireless charging system including: a resonant tank including a coil; an exciter electrically connected to the resonant tank; and a processing circuit in communication with at least the exciter, the processing circuit configured to: cause the exciter to excite the resonant tank; determine a first parameter indicative of inductance of the coil and a second parameter indicative of resistance of the coil associated with the coil being excited; and detect an object based on the first parameter indicating a decrease in inductance and the second parameter indicating an increase in resistance relative to when the object is not present.

In some aspects, the techniques described herein relate to a wireless charging system, wherein the first parameter includes a resonant frequency of the resonant tank and the second parameter includes a magnitude of an output voltage of the resonant tank.

In some aspects, the techniques described herein relate to a wireless charging system, wherein the processing circuit is configured to excite the resonant tank by at least sequentially applying a first plurality of signals to the resonant tank, each of the first plurality of signals generated based on a frequency of a plurality of frequencies, and wherein the processing circuit is configured to determine the first parameter and the second parameter by at least: measuring an output magnitude at an output terminal of the resonant tank associated with each of the first plurality of signals being applied to the resonant tank to obtain a first plurality of output magnitudes; and selecting one of the plurality of frequencies corresponding to a first maximum output magnitude among the first plurality of output magnitudes as a first resonant frequency of the resonant tank, wherein the first parameter includes the first resonant frequency and the second parameter includes the first maximum output magnitude.

In some aspects, the techniques described herein relate to a wireless charging system, wherein detecting the object includes: determining that a first point in a two-dimensional plane representing the first resonant frequency and the first maximum output magnitude falls to a first side of a distribution boundary in the two-dimensional plane; and in response to determining that the first point falls to the first side of the distribution boundary in the two-dimensional plane, generating a first processing result to indicate that the object is present on the coil.

In some aspects, the techniques described herein relate to a wireless charging system, wherein the processing circuit is configured to: cause the exciter to sequentially apply a second plurality of signals to the resonant tank, wherein each of the second plurality of signals is generated based on the frequency of the plurality of frequencies; measure the output magnitude at the output terminal of the resonant tank when each of the second plurality of signals is applied to the resonant tank to obtain a second plurality of output magnitudes; select one of the plurality of frequencies corresponding to a second maximum output magnitude among the second plurality of output magnitudes as a second resonant frequency of the resonant tank; determine that a second point in the two-dimensional plane representing the second resonant frequency and the second maximum output magnitude falls to a second side of the distribution boundary in the two-dimensional plane; and in response to determining that the second point falls to the second side of the distribution boundary in the two-dimensional plane, generate a second processing result to indicate that the coil is free from objects thereon.

In some aspects, the techniques described herein relate to a wireless charging system, wherein a first temperature associated with the resonant tank while applying the first plurality of signals to the resonant tank is different from a second temperature associated with the resonant tank while applying the second plurality of signals to the resonant tank.

In some aspects, the techniques described herein relate to a wireless charging system, wherein the processing circuit is configured to: based on the second processing result, cause a wireless charging pad to initiate inductive power transfer to another wireless charging pad.

In some aspects, the techniques described herein relate to a wireless charging system, wherein the distribution boundary includes a line in the two-dimensional plane, and wherein the first side of the distribution boundary is below the distribution boundary and the second side of the distribution boundary is above the distribution boundary.

In some aspects, the techniques described herein relate to a wireless charging system, wherein the processing circuit is configured to: demarcate the distribution boundary based on a distribution of a plurality of points in the two-dimensional plane, wherein each of the plurality of points represents a resonant frequency of the resonant tank and a maximum output magnitude at the output terminal under a corresponding operating condition associated with the resonant tank without objects present on the coil.

In some aspects, the techniques described herein relate to a wireless charging system, wherein the output magnitude at the output terminal includes a voltage at the output terminal.

In some aspects, the techniques described herein relate to a wireless charging system, wherein the plurality of frequencies include or are near a nominal resonant frequency of the resonant tank.

In some aspects, the techniques described herein relate to a wireless charging system, wherein the object is a metal object.

In some aspects, the techniques described herein relate to a method of object detection for wireless charging, the method including: causing an exciter to excite a resonant tank of a wireless charging pad, the resonant tank including a coil; determining a first parameter indicative of inductance of the coil and a second parameter indicative of resistance of the coil associated with the coil being excited; and detect an object based on the first parameter indicating a decrease in inductance and the second parameter indicating an increase in resistance relative to when the object is not present.

In some aspects, the techniques described herein relate to a method, wherein exciting the resonant tank includes sequentially applying a first plurality of signals to the resonant tank, each of the first plurality of signals generated based on a frequency of a plurality of frequencies, and wherein determining the first parameter and the second parameter includes: measuring an output magnitude at an output terminal of the resonant tank when each of the first plurality of signals is applied to the resonant tank to obtain a first plurality of output magnitudes; and selecting one of the plurality of frequencies corresponding to a first maximum output magnitude among the first plurality of output magnitudes as a first resonant frequency of the resonant tank, wherein the first parameter includes the first resonant frequency and the second parameter includes the first maximum output magnitude.

In some aspects, the techniques described herein relate to a method, wherein detecting the object includes: determining that a first point in a two-dimensional plane representing the first resonant frequency and the first maximum output magnitude falls to a first side of a distribution boundary in the two-dimensional plane; and in response to determining that the first point falls to the first side of the distribution boundary in the two-dimensional plane, generating a first processing result to indicate that the object is present on the wireless charging pad.

In some aspects, the techniques described herein relate to a method, further including: causing the exciter to sequentially apply a second plurality of signals to the resonant tank, wherein each of the second plurality of signals is generated based on the frequency of the plurality of frequencies; measuring the output magnitude at the output terminal of the resonant tank when each of the second plurality of signals is applied to the resonant tank to obtain a second plurality of output magnitudes; selecting one of the plurality of frequencies corresponding to a second maximum output magnitude among the second plurality of output magnitudes as a second resonant frequency of the resonant tank; determining that a second point in the two-dimensional plane representing the second resonant frequency and the second maximum output magnitude falls to a second side of the distribution boundary in the two-dimensional plane; and in response to determining that the second point falls to the second side of the distribution boundary in the two-dimensional plane in the two-dimensional plane, generating a second processing result to indicate that the wireless charging pad is free from objects thereon.

In some aspects, the techniques described herein relate to a method, wherein the method is performed while the wireless charging pad is not inductively transferring power to another wireless charging pad.

In some aspects, the techniques described herein relate to a method of object detection for wireless charging, the method including: exciting a resonant tank of a wireless charging pad, the resonant tank including a coil; and while the resonant tank is excited, detecting an object on the wireless charging pad based on a resistance of the coil increasing and an inductance of the coil decreasing.

In some aspects, the techniques described herein relate to a method, wherein exciting the resonant tank includes sequentially applying a first plurality of signals to the resonant tank, each of the first plurality of signals generated based on a frequency of a plurality of frequencies.

In some aspects, the techniques described herein relate to a method, wherein detecting the object includes: measuring an output magnitude at an output terminal of the resonant tank associated with each of the first plurality of signals is applied to the resonant tank to obtain a first plurality of output magnitudes; selecting one of the plurality of frequencies corresponding to a first maximum output magnitude among the first plurality of output magnitudes as a first resonant frequency of the resonant tank; determining that a first point in a two-dimensional plane representing the first resonant frequency and the first maximum output magnitude falls to a first side of a distribution boundary in the two-dimensional plane; and in response to determining that the first point falls to the first side of the distribution boundary in the two-dimensional plane, generating a first processing result to indicate that the object is present on the wireless charging pad.

Various combinations of the above and below recited features, embodiments, and aspects are also disclosed and contemplated by the present disclosure.

Additional embodiments of the disclosure are described below in reference to the appended claims, which may serve as an additional summary of the disclosure.

### BRIEF DESCRIPTION OF THE DRAWINGS

Throughout the drawings, reference numbers are re-used to indicate correspondence between referenced elements. The drawings are provided to illustrate examples of the subject matter described herein and not to limit the scope thereof.

Embodiments of the present disclosure are described with reference to the accompanying drawings, in which like reference characters reference like elements, and wherein:
FIG. 1 illustrates a perspective view of an example wireless charging pad that can implement embodiments of the present disclosure.
FIG. 2 illustrates a top view of the wireless charging pad of FIG. 1 with an enlarged view of certain parts of the wireless charging pad in accordance with some embodiments of the present disclosure.
FIG. 3 is an example schematic diagram of components of an object detector for detecting one or more foreign objects on a wireless charging pad (e.g., the wireless charging pad of FIG. 1) in accordance with some embodiments of the present disclosure.
FIG. 4 illustrates example curves of output magnitudes at an output terminal of a resonant tank of the wireless charging pad versus corresponding frequencies of signals that are used to excite the resonant tank in accordance with some embodiments of the present disclosure.
FIG. 5 illustrates an example distribution graph of maximum output magnitudes at an output terminal of the resonant tank of the wireless charging pad versus corresponding resonant frequencies of the resonant tank in accordance with some embodiments of the present disclosure.

### DETAILED DESCRIPTION OF CERTAIN EMBODIMENTS

The following description of certain embodiments presents various descriptions of specific embodiments. However, the innovations described herein can be embodied in a multitude of different ways, for example, as defined and covered by the claims. In this description, reference is made to the drawings where like reference numerals can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. Any suitable principles and advantages of the embodiments disclosed herein can be implemented together with each other.

Generally described, one or more aspects of the present disclosure relate to detecting object(s) on or near a surface of a wireless charging device (e.g., a wireless charging pad) to mitigate undesired heat generation that can lead to undesired consequences (e.g., ignition). More specifically, some embodiments of the present disclosure relate to methods and systems that can reliably detect foreign objects on a wireless charging pad under varying temperatures. In some embodiments, an object detector can utilize a set of inductive coils included in resonant tanks, and excite (e.g., using one or more half-bridge circuits) the resonant tanks using signals in a range of frequencies including or near a nominal resonant frequency of the resonant tanks. The object detector can detect a metal object based on a resistance of a coil increasing and inductance of the coil decreasing. This can be distinguished from changes in temperature when a metal object is not present, where an increase in temperature can cause both inductance and resistance of the coil to increase. By analyzing the shifts and/or distributions in resonant frequencies and output magnitudes (e.g., output voltage peaks), the object detector can distinguish between changes of frequencies and magnitudes caused by temperature and those caused by foreign objects to accurately detect the foreign objects. Such analysis can account for shifts in both inductance and resistance of a coil.

In the realm of wireless charging technologies, detecting the presence of foreign objects (e.g., foreign metal objects) on or near a charging surface can be significant. An object on the charging surface can become heated due to induced eddy currents during a charging process, potentially leading to thermal events or safety hazards. For example, during inductive charging, the magnetic fields generated by a wireless charging pad can cause unintended heating of foreign objects disposed on the wireless charging pad. The unintended heating can pose significant risks to both the wireless charging pad, the surrounding environment, and/or users.

Certain solutions for detecting metal objects in wireless charging systems can involve fixed-frequency detection techniques, which typically involve monitoring changes in an output magnitude of a resonant tank circuit to identify the presence of metal objects. However, such approaches may not be reliable or robust against variations in ambient and/or unit temperatures. More specifically, temperature fluctuations of or around a wireless charging pad can cause changes in the inductance and resistance of an inductive coil in the wireless charging pad. The changes in inductance and resistance due to the temperature fluctuations can lead to false positives or negatives in metal object detection. This lack of detection robustness against temperature variation in such solutions can limit their effectiveness and reliability, particularly in environments with significant temperature variations.

To address at least a portion of the above problems, some embodiments of the present disclosure disclose an object detector that can distinguish changes in inductance and resistance of an inductive coil caused by temperature from changes in inductance and resistance of the inductive coil caused by a foreign object, thereby reliably detecting the presence of the foreign object on a charging surface.

In some embodiments, the object detector can include a set of inductive coils (e.g., 50, 60, 70, 80, 90, and/or other number of inductive coils) each included in a resonant tank (e.g., a RLC resonant tank). The object detector can excite the resonant tank using signals in a range of frequencies (e.g., through a frequency sweep) that include or are near a nominal resonant frequency of the resonant tank, and capture output magnitudes (e.g., output voltages) of the resonant tank at various frequencies to obtain result data. The result data can include multiple pairs of output magnitudes of the resonant tank and corresponding frequencies. The result data can be fit to a curve (e.g., a quadratic curve) for precisely identifying a resonant frequency of the resonant tank and the maximum output magnitude of the resonant tank. By analyzing shifts or variations in resonant frequencies and output magnitudes (e.g., determining a significant deviation from a linear trend formed by resonant frequencies and voltage peaks), the object detector can distinguish between changes in resonant frequencies and output magnitudes caused by temperature and those caused by foreign objects (e.g., foreign metal objects) to accurately detect the foreign objects.

In some embodiments, the object detector or a wireless charging system can include a resonant tank having a coil, an exciter electrically connected to the resonant tank, and a processing circuit in communication with at least the exciter. The processing circuit can control the exciter to sequentially apply multiple signals to the resonant tank, where each of the multiple signals is generated based on a respective frequency in a frequency range (e.g., using a frequency sweep that spans frequencies below and above a nominal resonant frequency of the resonant tank). While each of the multiple signals is applied, the processing circuit can measure an output magnitude at an output terminal of the resonant tank to obtain multiple output magnitudes. The processing circuit can identify a maximum output magnitude among the multiple output magnitudes and select, as a resonant frequency of the resonant tank, a frequency in the frequency range corresponding to the maximum output magnitude. The processing circuit can then map the resonant frequency and the maximum output magnitude to a point in a two-dimensional plane (e.g., a plane having resonant frequency as one axis and maximum output magnitude as the other axis), determine that the point falls to a side of a distribution boundary in the two-dimensional plane (e.g., below the distribution boundary that separates a temperature-variation distribution from an object-present distribution), and, in response, generate a processing result indicating that an object is present on the coil.

Advantageously, by being able to distinguish between changes in resonant frequencies and output magnitudes caused by temperature and those caused by foreign objects, the object detector can reduce false positives or negatives in object detection while operating under temperature fluctuations associated with ambient conditions and/or a wireless charging device. The ability to distinguish changes caused by temperature and those caused by foreign objects can further enable the object detector to detect foreign objects across a range of temperatures, and detect foreign objects soon after a wireless charging session stops (e.g., when a wireless charging pad is still warmer than before the wireless charging session starts) or ends. These capabilities can be significant for ensuring safety and mitigating or preventing thermal events when charging is interrupted or completed because, for example, foreign objects may be introduced on the wireless charging pad after a living object is detected near the wireless charging pad and causes wireless charging to stop. Additionally, object detection method(s) implemented by the object detector can be implemented without continuous performance, execution, or operation, and the object detector can be implemented without calibration at startup.

Although aspects of the present disclosure will be described with regard to illustrative components, interactions, and routines, one skilled in the relevant art will appreciate that one or more aspects of the present disclosure may be implemented in accordance with various environments, system architectures, customer computing device architectures, and the like. More specifically, aspects of the present application may be applicable under different contexts (e.g., associated with a ground pad, a vehicle pad, a wireless charging pad for charging vehicles or other devices through wireless charging). Similarly, references to specific devices, such as a wireless charging pad, can be considered to be general references and not intended to provide additional meaning or configurations for the individual wireless charging pad. Still, further, illustrations and example configurations are not intended to be limited and should not be construed as limiting the scope of the present disclosure. Additionally, the examples are intended to be illustrative in nature and should not be construed as limiting.

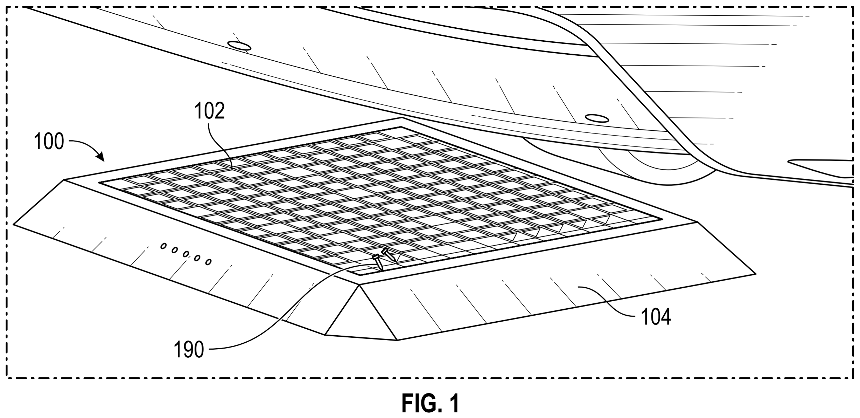

FIG. 1 illustrates a perspective view of an example wireless charging pad 100 (e.g., a ground pad) in which embodiments of the present disclosure can be implemented. As shown in FIG. 1, the wireless charging pad 100 can include at least a minicoil board 102 and a housing 104. Although not illustrated in FIG. 1, in some examples, the minicoil board 102 can be a printed circuit board (PCB) that is housed and enclosed within the housing 104. For example, the minicoil board 102 can be under and covered by a top portion (e.g., a plate, a sheet, or a plastic sheet) of the housing 104. As shown in FIG. 1, above the minicoil board 102 is a foreign object 190 that can be a metal object (e.g., a nail as illustrated, a coin, or the like). The foreign object 190 can be disposed on and directly in contact with the top portion of the housing 104.

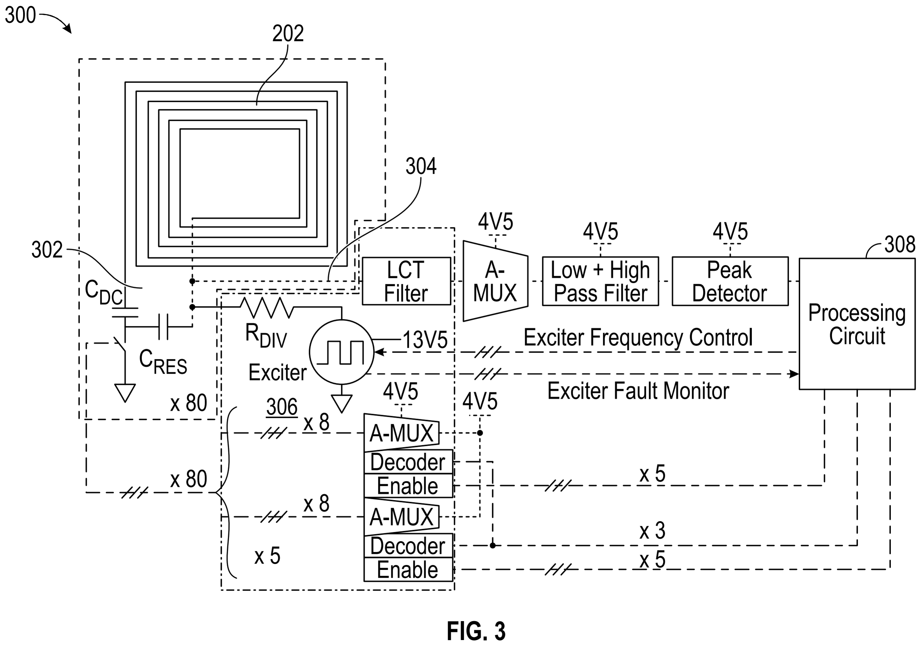

Although not readily observed in FIG. 1, in some examples, the wireless charging pad 100 can include a charging coil (not shown in FIG. 1) and an object detector (e.g., the object detector 300 that will be described with reference to FIG. 3). For example, the charging coil and the object detector can be disposed within the housing 104 (e.g., under the top portion of the housing 104). The charging coil can cause generation of magnetic fields from an input current provided from an energy source (e.g., a junction box not shown in FIG. 1) to enable wireless charging, such as induction-based wireless charging to charge an electric vehicle. In some examples, the wireless charging pad 100 can be configured to charge a battery pack of an electric vehicle, where the battery pack can have a nominal voltage of over 200 Volts (e.g., a nominal voltage of about 350 Volts or 355 Volts) and a maximum voltage of 400 Volts. In some examples, the wireless charging pad 100 can be configured to supply 800 Volts of direct current power. In some embodiments, the wireless charging pad 100 can supply a voltage in a range from about 200 Volts to 800 Volts.

In some examples, the object detector can include a set of inductive coils included in resonant tanks, and excite (e.g., using one or more half-bridge circuits) the resonant tanks using signals in a range of frequencies including or near a nominal resonant frequency of the resonant tanks. By analyzing the shifts and/or distributions of resonant frequencies and output magnitudes (e.g., output voltage peaks), the object detector can distinguish between changes caused by temperature and changes caused by the foreign object 190 to accurately detect the foreign object 190 above the minicoil board 102 of the wireless charging pad 100.

In some examples, the object detector can utilize the set of inductive coils to detect the foreign object 190 when the charging coil is not activated to enable wireless charging. As such, the object detector can advantageously "actively" detect an object above the minicoil board 102 while the wireless charging pad 100 is not transferring power through wireless charging. The set of inductive coils can be implemented on a printed circuit board. The set of inductive coils can be within the housing 104 of the wireless charging pad 100. Each coil of the set of inductive coils can be smaller than the coil of the wireless charging pad 100 that is used for wireless power transfer.

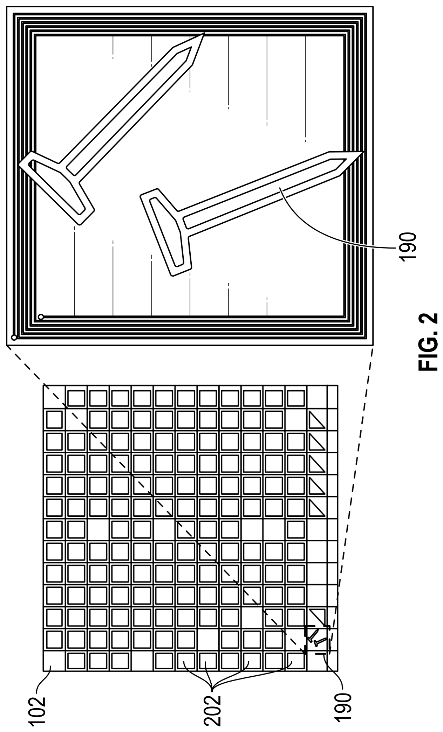

FIG. 2 illustrates a top view of the wireless charging pad 100 with an enlarged view of certain parts of the wireless charging pad 100 in accordance with some embodiments of the present disclosure. As shown in FIG. 2, the set of inductive coils 202 can be disposed on the minicoil board 102. As discussed above, a sheet of plastic or other suitable material of the housing 104 of the wireless charging pad 100 can be positioned between the minicoil board 102 and the foreign object 190. The minicoil board 102 can be arranged to detect the foreign object 190 through the housing 104.

In some examples, the set of inductive coils 202 can be included and/or utilized by the object detector (e.g., the object detector 300 that will be described with reference to FIG. 3) to detect the foreign object 190. The object detector can utilize the set of inductive coils 202 that are included in resonant tanks, and excite (e.g., using one or more half-bridge circuits not shown in FIG. 2) the resonant tanks using signals in a range of frequencies including or near a nominal resonant frequency of the resonant tanks. By analyzing the shifts in resonant frequencies and maximum output magnitudes (e.g., output voltage peaks), the object detector can accurately distinguish between changes caused by temperature and those caused by the foreign object 190 to accurately detect the foreign object 190.

In some examples, the set of inductive coils 202 may include 50, 60, 70, 80, 90, or any other suitable number of inductive coils. In some examples, each inductive coil can have a nominal inductance of, of about, of at least, or of at least about 5 micro-Henry (µH), 6 µH, 7 µH, 8 µH, 9 µH, 10 µH, 11 µH, 12 µH, 13 µH, 14 µH, 15 µH, or any suitable range of values between any two of these values. In some examples, each inductive coil can have a nominal resistance of, of about, of at least, or of at least about 1 ohm, 2 ohm, 3 ohm, 4 ohm, 5 ohm, 6 ohm, 7 ohm, 8 ohm, 9 ohm, 10 ohm, or any suitable range of values between any two of these values.

FIG. 3 illustrates an example schematic diagram of components of an object detector 300 for detecting foreign object(s), such as the foreign object 190 above the minicoil board 102 of the wireless charging pad 100, in accordance with some embodiments of the present disclosure. As shown in FIG. 3, the object detector 300 can include at least an inductive coil 202 of a resonant tank 302, an exciter 306 (e.g., a signal generator), and a processing circuit 308. As noted above, the inductive coil 202 can be disposed on the minicoil board 102. The resonant tank 302 can have an output terminal 304. The object detector 300 can be deployed within a wireless charger, a wireless charging device, or a wireless charging pad (e.g., the wireless charging pad 100). The resonant tank 302 can include an inductive coil 202 and a capacitor C_{RES}.

In some examples, the resonant tank 302 can include or be a RLC resonant tank. The exciter 306 can include a half-bridge circuit, and can be embodied as an integrated circuit (IC). The processing circuit 308 can be embodied as a microprocessor, central processing unit (CPU), digital signal processor (DSP), microcontroller, or any other suitable processor or processing/controlling circuit. The resonant tank 302 can have a nominal resonant frequency that can be determined based at least in part on a nominal inductance and a nominal resistance associated with the inductive coil 202.

In operation, the exciter 306 can excite the resonant tank 302 using signals in a range of frequencies (e.g., through a frequency sweep) that include or are near a nominal resonant frequency of the resonant tank 302. For example, the exciter 306 can generate signals that sweep from frequencies below the nominal resonant frequency to frequencies above the nominal resonant frequency. The signals can be injected into the resonant tank 302 under various operating conditions associated with the resonant tank 302 (e.g., temperature fluctuation around the resonant tank 302 and/or presence of a foreign object around the resonant tank 302). Output magnitudes at the output terminal 304 of the resonant tank 302 can be filtered and processed (e.g., using low pass and high pass filtering, peak detection, etc.) before being captured by the processing circuit 308 to obtain result data. The result data can include multiple pairs of output magnitudes at the output terminal 304 of the resonant tank 302 and corresponding frequencies of signals that are used to excite the resonant tank 302. As noted above, the result data can be obtained under temperature fluctuations (e.g., fluctuations of ambient temperature) and/or presence of foreign object(s) around the resonant tank 302.

The processing circuit 308 can determine a first parameter indicative of inductance of the coil 202 and a second parameter indicative of resistance of the coil 202. Resonant frequency is a parameter indicative of inductance of the coil 202. Resonant frequency can be proportional to 1/(L²), where L is coil inductance. The maximum output voltage magnitude of the resonant tank is indicative of resistance of the coil 202. This voltage can be proportional to 1/R, where R is coil resistance. The processing circuit 308 can detect the object 190 based on the first parameter indicating a decrease in inductance and the second parameter indicating an increase in resistance relative to when the object 190 is not present.

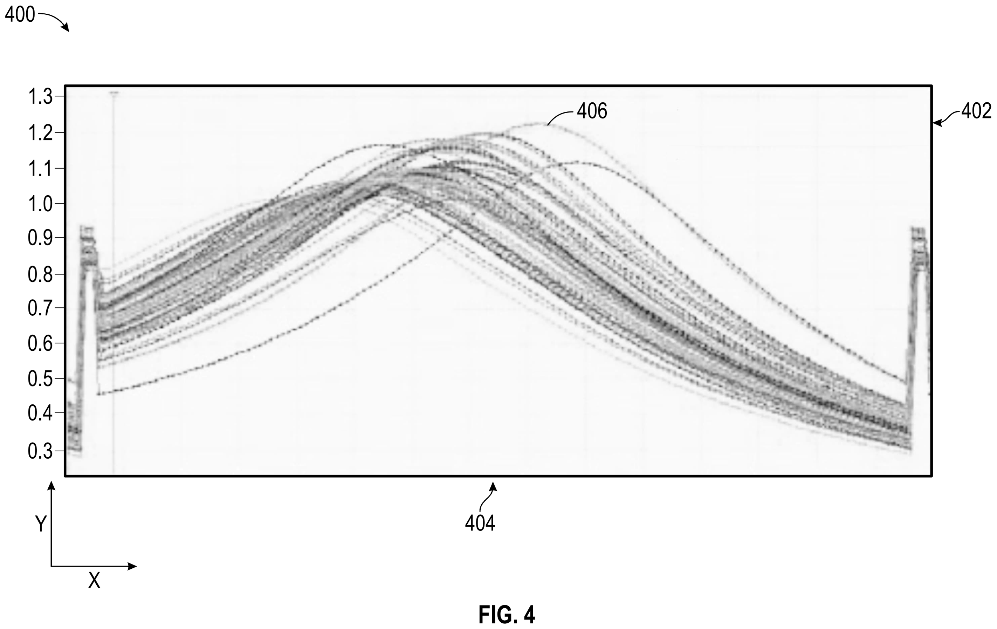

In some examples, the processing circuit 308 can fit the result data using one or more curves (e.g., a quadratic curve) to precisely identify a resonant frequency of the resonant tank 302 and the maximum output voltage magnitude at the output terminal 304 of the resonant tank 302. Example curves fit by the processing circuit 308 to identify a resonant frequency of the resonant tank 302 and the maximum output magnitude at the output terminal 304 of the resonant tank 302 will be described with reference to FIG. 4.

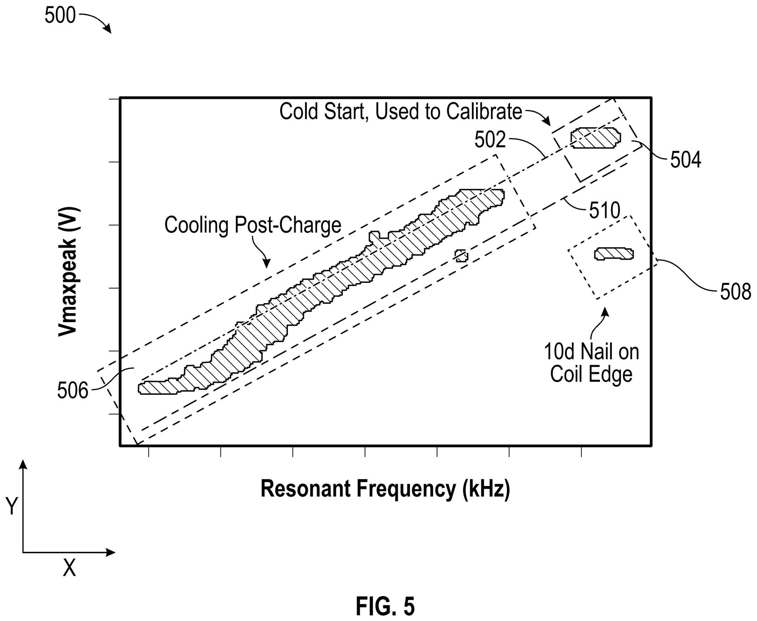

By analyzing shifts and/or variations in resonant frequencies and maximum output magnitudes at the output terminal 304 (e.g., determining a significant deviation from a linear trend formed by resonant frequencies and voltage peaks), the processing circuit 308 can distinguish between changes in resonant frequencies and maximum output magnitudes caused by temperature and those caused by foreign objects (e.g., foreign metal objects) to accurately detect the foreign objects. An example approach to distinguish between changes in resonant frequencies of the resonant tank 302 and maximum output magnitudes at the output terminal 304 caused by temperature and those caused by foreign objects (e.g., the foreign object 190) based on deviation from the linear trend will be described with reference to FIG. 5.

In some examples, for instance as shown in FIG. 3, the object detector 300 can include eighty inductive coils 202 that are respectively included in eighty resonant tanks 302. The object detector 300 can include fewer exciters 306 than inductive coils 202 and utilize multiplexing circuitry to transmit signals generated by the same exciter 306 to different resonant tanks 302. For example, the object detector 300 can include five exciters 306 and utilize multiplexing circuitry such that each of the five exciters 306 can be used to excite sixteen resonant tanks 302.

FIG. 4 illustrates example curves 400 showing output magnitudes at the output terminal 304 of the resonant tank 302 versus corresponding frequencies of signals that are used to excite the resonant tank 302 in accordance with some embodiments of the present disclosure. The Y-axis represents output magnitudes at the output terminal 304. The X-axis represents frequencies corresponding to the output magnitudes.

As shown in FIG. 4, the example curves 400 can be used or fit by the processing circuit 308 to identify a resonant frequency of the resonant tank 302 and the maximum output magnitude at the output terminal 304 of the resonant tank 302. For example, based on a curve 406, a resonant frequency (e.g., a frequency value at a position of the X-axis indicated by an arrow 404) of the resonant tank 302 and the maximum output magnitude (e.g., a voltage value at a position of the Y-axis indicated by an arrow 402) at the output terminal 304 of the resonant tank 302 can be identified. More specifically, the resonant frequency indicated by the arrow 404 and the voltage value indicated by the arrow 402 can be identified based on a peak of or a local maximum of the curve 406. In some examples, each of the curves 400 (e.g., the curve 406) can correspond to an operating condition associated with the resonant tank 302 and/or the wireless charging pad 100 (e.g., temperature fluctuation around the resonant tank 302 and/or presence of the foreign object 190 around the resonant tank 302).

FIG. 5 illustrates an example distribution graph 500 of maximum output magnitudes at the output terminal 304 of the resonant tank 302 versus corresponding resonant frequencies of the resonant tank 302 in accordance with some embodiments of the present disclosure. The Y-axis represents maximum output magnitude at the output terminal 304. The X-axis represents the corresponding resonant frequency. In some examples, each of the points in the distribution graph 500 can be obtained by using or fitting each of the curves 400. For example, one of the points in the distribution graph 500 can correspond to the resonant frequency and the maximum output magnitude obtained based on the curve 406 of FIG. 4.

As shown in FIG. 5, most of the points in the distribution graph 500 follow a linear trend represented by a line 502. This can be due to resonant frequencies and maximum output magnitudes at the output terminal 304 of the resonant tank 302 both varying roughly linearly with temperature associated with the resonant tank 302. More specifically, maximum output magnitudes can be linearly correlated with a resistance of the inductive coil 202 of the resonant tank 302. In certain applications, the resistance of the inductive coil 202 of the resonant tank 302 can be linearly correlated with temperature due to an increase in copper resistivity associated with temperature. Resonant frequencies of the resonant tank 302 can be linearly correlated with the temperature of and/or around the resonant tank 302 at least because temperature changes can cause traces of the inductive coil 202 to expand, thereby affecting the inductance of the inductive coil 202.

In some examples, the linear trend represented by the line 502 can be used by the processing circuit 308 to distinguish between changes in resonant frequencies of the resonant tank 302 and maximum output magnitudes at the output terminal 304 caused by temperature and those caused by foreign objects (e.g., the foreign object 190). For example, when temperature of and/or around the resonant tank 302 increases without a foreign object near the resonant tank 302, maximum output magnitudes and corresponding resonant frequencies obtained by the processing circuit 308 through fitting curves (e.g., the curves 400) can move from the top right (e.g., a region 504 having higher maximum output magnitudes and higher corresponding resonant frequencies) of the distribution graph 500 to the bottom left (e.g., a region 506 having lower maximum output magnitudes and lower corresponding resonant frequencies) of the distribution graph 500. This can be due to temperature increasing, which can cause a resistance of the inductive coil 202 and an inductance of the inductive coil to both increase. In FIG. 5, the region 504 can correspond to a cold start and the region 506 can correspond to cooling after a charge.

However, when a foreign object (e.g., the foreign object 190) is around the resonant tank 302, maximum output magnitudes and corresponding resonant frequencies obtained by the processing circuit 308 through fitting curves (e.g., the curves 400 of FIG. 4) can deviate significantly from the line 502 (e.g., across a boundary 510 toward bottom right of the distribution graph 500) to move into a region 508. The region 508 can correspond to a foreign metal object on a surface of a wireless charger. When the foreign object 190 is around the resonant tank 302, the resistance of the inductive coil 202 of the resonant tank 302 can increase and the inductance of the inductive coil 202 can decrease. As such, a deviation from the line 502 beyond the boundary 510 can indicate a change in coil resistance or inductance not solely caused by the temperature of and/or around the resonant tank 302, which can reliably indicate the presence of the foreign object 190.

Advantageously, by being able to distinguish between changes in resonant frequency and maximum output magnitude caused by temperature and such changes caused by foreign objects, the object detector 300 (e.g., the processing circuit 308) can reliably detect a foreign metal object and reduce false positives or negatives in object detection while operating under temperature fluctuations associated with ambient and/or the wireless charging pad 100. The ability to distinguish changes caused by temperature and those caused by foreign objects further enables the object detector 300 to detect foreign objects across a range of temperatures, and detect foreign objects soon after a wireless charging session stops (e.g., when the wireless charging pad 100 is still warmer than before the wireless charging session starts) or ends. These capabilities can be significant for ensuring safety and mitigating or preventing thermal events when charging is interrupted or completed because, for example, the foreign object 190 may be introduced on the wireless charging pad 100 right after a living object is detected near the wireless charging pad 100 and causes wireless charging to stop. Such capabilities can also enable the wireless charging pad 100 to recover from a false trip associated with a passive mode object detection (PMOD) system, which would otherwise involve user intervention for recovery. Additionally, object detection methods (e.g., injecting signals in a range of frequencies, obtaining mapping between output magnitudes and corresponding frequencies, fitting curves to identify maximum output magnitudes and resonant frequencies) implemented by the object detector 300 can be implemented without continuous performance, execution, or operation, and the object detector 300 can be implemented without calibration at startup.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the scope of protection is limited by the claims.

It is to be understood that not necessarily all objects or advantages may be achieved in accordance with any particular example described herein. Thus, for example, those skilled in the art will recognize that some examples may be operated in a manner that achieves or optimizes one advantage or group of advantages as taught herein without necessarily achieving other objects or advantages as may be taught or suggested herein.

All of the processes described herein may be embodied in, and fully automated via, software code modules executed by a processing system that includes one or more processors. The code modules may be stored in any type of non-transitory computer-readable medium or other computer storage device. Some or all the methods may be embodied in specialized computer hardware.

Many other variations than those described herein will be apparent from this disclosure. For example, depending on the example, some acts, events, or functions of any of the algorithms described herein can be performed in a different sequence, can be added, merged, or left out altogether (for example, not all described acts or events are necessary for the practice of the algorithms). Moreover, in some examples, acts or events can be performed concurrently, for example, through multi-threaded processing, interrupt processing, or multiple processors or processor cores, or on other parallel architectures, rather than sequentially. In addition, different tasks or processes can be performed by different machines and/or computing systems that can function together.

The various illustrative logical blocks and modules described in connection with the examples disclosed herein can be implemented or performed by a machine, such as a processing unit or processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor can be a microprocessor, but in the alternative, the processor can be a controller, microcontroller, or state machine, combination of the same, or the like. A processor can include electrical circuitry to process computer-executable instructions. In some examples, a processor includes an FPGA or other programmable device that performs logic operations without processing computer-executable instructions. A processor can also be implemented as a combination of computing devices, for example, a combination of a DSP and a microprocessor, a plurality of microprocessors, microprocessors in conjunction with a DSP core, or any other such configuration. Although described herein primarily with respect to digital technology, a processor may also include primarily analog components. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

The processes described herein or illustrated in the figures of the present disclosure may begin in response to an event, such as on a predetermined or dynamically determined schedule, on demand when initiated by a user or system administrator, or in response to some other event. When such processes are initiated, a set of executable program instructions stored on one or more non-transitory computer-readable media (e.g., hard drive, flash memory, removable media, etc.) may be loaded into memory (e.g., RAM) of a server or other computing device. The executable instructions may then be executed by a hardware-based computer processor of the computing device. In some embodiments, such processes or portions thereof may be implemented on multiple computing devices and/or multiple processors, serially or in parallel.

Conditional language such as, among others, "can," "could," "might" or "may," unless specifically stated otherwise, are otherwise understood within the context as used in general to convey that some examples include, while other examples do not include, some features, elements and/or steps. Thus, such conditional language is not generally intended to imply that features, elements and/or steps are in any way for examples or that examples necessarily include logic for deciding, with or without user input or prompting, whether these features, elements and/or steps are included or are to be performed in any particular example.

Disjunctive language such as the phrase "at least one of X, Y, or Z," unless specifically stated otherwise, is otherwise understood with the context as used in general to present that an item, term, etc., may be either X, Y, or Z, or any combination thereof (for example, X, Y, and/or Z). Thus, such disjunctive language is not generally intended to, and should not, imply that some examples require at least one of X, at least one of Y, or at least one of Z to each be present.

Any process descriptions, elements or blocks in the flow diagrams described herein and/or depicted in the attached figures should be understood as potentially representing modules, segments, or portions of code which include executable instructions for implementing specific logical functions or elements in the process. Alternate examples are included within the scope of the examples described herein in which elements or functions may be deleted, executed out of order from that shown, or discussed, including substantially concurrently or in reverse order, depending on the functionality involved as would be understood by those skilled in the art.

It should be emphasized that many variations and modifications may be made to the above-described examples, the elements of which are to be understood as being among other acceptable examples. All such modifications and variations are intended to be included herein within the scope of this disclosure.

Any process descriptions, elements or blocks in the flow diagrams described herein and/or depicted in the attached figures should be understood as potentially representing modules, segments, or portions of code which include executable instructions for implementing specific logical functions or elements in the process. Alternate implementations are included within the scope of the examples described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B, and C" can include a first processor configured to carry out recitation A working in conjunction with a second processor configured to carry out recitations B and C.

## Claims

1. A wireless charging system comprising:
a resonant tank comprising a coil;
an exciter electrically connected to the resonant tank; and
a processing circuit in communication with at least the exciter, the processing circuit configured to:
cause the exciter to excite the resonant tank;
determine a first parameter indicative of inductance of the coil and a second parameter indicative of resistance of the coil associated with the coil being excited; and
detect an object based on the first parameter indicating a decrease in inductance and the second parameter indicating an increase in resistance relative to when the object is not present, wherein the object may be a metal object.

2. The wireless charging system of Claim 1, wherein the first parameter comprises a resonant frequency of the resonant tank and the second parameter comprises a magnitude of an output voltage of the resonant tank.

3. The wireless charging system of Claim 1 or 2, wherein the processing circuit is configured to excite the resonant tank by at least sequentially applying a first plurality of signals to the resonant tank, each of the first plurality of signals generated based on a frequency of a plurality of frequencies, and wherein the processing circuit is configured to determine the first parameter and the second parameter by at least:
measuring an output magnitude at an output terminal of the resonant tank associated with each of the first plurality of signals being applied to the resonant tank to obtain a first plurality of output magnitudes; and
selecting one of the plurality of frequencies corresponding to a first maximum output magnitude among the first plurality of output magnitudes as a first resonant frequency of the resonant tank,
wherein the first parameter comprises the first resonant frequency and the second parameter comprises the first maximum output magnitude.

4. The wireless charging system of Claim 3, wherein detecting the object comprises:
determining that a first point in a two-dimensional plane representing the first resonant frequency and the first maximum output magnitude falls to a first side of a distribution boundary in the two-dimensional plane; and
in response to determining that the first point falls to the first side of the distribution boundary in the two-dimensional plane, generating a first processing result to indicate that the object is present on the coil.

5. The wireless charging system of Claim 4, wherein the processing circuit is configured to:
cause the exciter to sequentially apply a second plurality of signals to the resonant tank, wherein each of the second plurality of signals is generated based on the frequency of the plurality of frequencies;
measure the output magnitude at the output terminal of the resonant tank when each of the second plurality of signals is applied to the resonant tank to obtain a second plurality of output magnitudes;
select one of the plurality of frequencies corresponding to a second maximum output magnitude among the second plurality of output magnitudes as a second resonant frequency of the resonant tank;
determine that a second point in the two-dimensional plane representing the second resonant frequency and the second maximum output magnitude falls to a second side of the distribution boundary in the two-dimensional plane; and
in response to determining that the second point falls to the second side of the distribution boundary in the two-dimensional plane, generate a second processing result to indicate that the coil is free from objects thereon.

6. The wireless charging system of Claim 5, wherein a first temperature associated with the resonant tank while applying the first plurality of signals to the resonant tank is different from a second temperature associated with the resonant tank while applying the second plurality of signals to the resonant tank.

7. The wireless charging system of Claim 5 or 6, wherein the processing circuit is configured to:
based on the second processing result, cause a wireless charging pad to initiate inductive power transfer to another wireless charging pad.

8. The wireless charging system of one of Claims 4 to 7, wherein the distribution boundary comprises a line in the two-dimensional plane, and wherein the first side of the distribution boundary is below the distribution boundary and the second side of the distribution boundary is above the distribution boundary.

9. The wireless charging system of one of Claims 4 to 8, wherein the processing circuit is configured to:
demarcate the distribution boundary based on a distribution of a plurality of points in the two-dimensional plane,
wherein each of the plurality of points represents a resonant frequency of the resonant tank and a maximum output magnitude at the output terminal under a corresponding operating condition associated with the resonant tank without objects present on the coil.

10. The wireless charging system of one of Claims 3 to 9, wherein the output magnitude at the output terminal comprises a voltage at the output terminal; and/or
wherein the plurality of frequencies include or are near a nominal resonant frequency of the resonant tank.

11. A method of object detection for wireless charging, the method comprising:
exciting a resonant tank of a wireless charging pad, the resonant tank comprising a coil; and
while the resonant tank is excited, detecting an object on the wireless charging pad based on a resistance of the coil increasing and an inductance of the coil decreasing.

12. The method of claim 11 wherein:
an exciter is caused to excite the resonant tank; and further comprising:
determining a first parameter indicative of the inductance of the coil and a second parameter indicative of the resistance of the coil associated with the coil being excited; and
detecting the object based on the first parameter and the second parameter relative to when the object is not present

13. The method of Claim 11 or 12, wherein exciting the resonant tank comprises sequentially applying a first plurality of signals to the resonant tank, each of the first plurality of signals generated based on a frequency of a plurality of frequencies, and preferably wherein determining the first parameter and the second parameter comprises:
measuring an output magnitude at an output terminal of the resonant tank when each of the first plurality of signals is applied to the resonant tank to obtain a first plurality of output magnitudes; and
selecting one of the plurality of frequencies corresponding to a first maximum output magnitude among the first plurality of output magnitudes as a first resonant frequency of the resonant tank,
wherein the first parameter comprises the first resonant frequency and the second parameter comprises the first maximum output magnitude.

14. The method of Claim 13, wherein detecting the object comprises:
determining that a first point in a two-dimensional plane representing the first resonant frequency and the first maximum output magnitude falls to a first side of a distribution boundary in the two-dimensional plane; and
in response to determining that the first point falls to the first side of the distribution boundary in the two-dimensional plane, generating a first processing result to indicate that the object is present on the wireless charging pad.

15. The method of Claim 14, further comprising:
causing the exciter to sequentially apply a second plurality of signals to the resonant tank, wherein each of the second plurality of signals is generated based on the frequency of the plurality of frequencies;
measuring the output magnitude at the output terminal of the resonant tank when each of the second plurality of signals is applied to the resonant tank to obtain a second plurality of output magnitudes;
selecting one of the plurality of frequencies corresponding to a second maximum output magnitude among the second plurality of output magnitudes as a second resonant frequency of the resonant tank;
determining that a second point in the two-dimensional plane representing the second resonant frequency and the second maximum output magnitude falls to a second side of the distribution boundary in the two-dimensional plane; and
in response to determining that the second point falls to the second side of the distribution boundary in the two-dimensional plane, generating a second processing result to indicate that the wireless charging pad is free from objects thereon.
